# EUROPEAN PATENT SPECIFICATION

(11) **EP 1 328 572 B1**
(45) Date of publication and mention of the grant of the patent: **14.11.2007**
(21) Application number: 01975904.2
(22) Date of filing: 02.10.2001
(51) Int. Cl.: C08J 3/28, C08L 23/10, C08L 23/16

(54) **CROSSLINKED HEAT SHRINKABLE POLYPROPYLENE COMPOSITIONS**
VERNETZTE, SCHRUMPFFÄHIGE POLYPROPYLENE ZUSAMMENSETZUNG
COMPOSITIONS DE POLYPROPYLENE RETICULEES ET THERMORETRACTABLES

(30) Priority: 16.10.2000 CA 2323307; 06.11.2000 US 705954; 06.11.2000 CA 2325217
(43) Date of publication of application: 23.07.2003
(73) Proprietor: ShawCor Ltd., Toronto, Ontario M9W 1M7 (CA)
(72) Inventor: JACKSON, Peter, Toronto, Ontario M8V 2G7 (CA); HEYDRICH, Marcus, P., Mississauga, Ontario L5A 1Y7 (CA)
(74) Representative: Sajda, Wolf E.
(86) International application number: PCT/CA2001/001394
(87) International publication number: WO 2002/032983

(56) References cited:
- WO-A-00/69930
- WO-A-95/34597
- US-A- 4 336 212

## Description

### FIELD OF THE INVENTION

The present invention relates to polymeric compositions and their uses, and more particularly to crosslinked compositions of polypropylene with ethylene-propylene elastomers, and their uses as coating and insulating materials, particularly those that are heat-shrinkable, but not necessarily restricted thereto.

### BACKGROUND TO THE INVENTION

Polypropylenes are ideally suited to the preparation of coatings and insulations designed for use at operating temperatures in excess of those that can be withstood by other polyolefins such as, for example polyethylene, which exhibit lower softening and melting temperatures. Other attractive features are their high rigidity and toughness, low cost and relatively low density. Applications for these coatings and insulations would include polymeric insulation for electrical wires and cables, heat-shrinkable, corrosion protection sleeves for high-temperature transmission pipeline joints, heat-shrinkable tubing or shapes for electrical insulation and mechanical protection, or in applications requiring greater toughness and rigidity than is afforded by polyethylene-based systems. For example, heat-shrinkable sleeves used for the corrosion protection of high temperature pipeline joints are required to maintain dimensional stability and integrity at the operating temperature of the pipeline. Hence it is necessary to use a material, such as polypropylene, with a softening temperature or melting point high enough to prevent creeping or sagging of the sleeve from the pipe at the continuous operating temperature of the pipeline.

Also, in order to maximise thermal stability and physical properties, it is necessary to impart some thermoset characteristic to the material. This is done by crosslinking the polymer to some required degree. Cross/inking is also necessary for the production of heat-shrinkable articles in order to impart controlled shrinkage characteristics. The aim of this invention is to provide a means of preparing crosslinked, predominantly polypropylene-based, heat-shrinkable compositions, which can be used in the applications described, but not necessarily restricted thereto.

Polymers in which the predominant chain units comprise an alpha olefin, such as polypropylenes, are known to preferentially depolymerise or degrade when exposed to free radicals required to effect crosslinking. Hence, unlike similar materials, namely polyolefins such as polyethylenes and copolymers of polyethylene, it is not possible to crosslink polypropylene-based materials to satisfactory levels, as is required, for example, in the production of heat-shrinkable articles such as tubing, sheet, and moulded shapes, by using standard free-radical methods of crosslinking, such as electron beam irradiation, gamma irradiation, or peroxide-initiated crosslinking.

Work described in US Patent Nos. 3,717, 559 and 4,424,293, for example, shows that certain polypropylenes with the addition of acrylate crosslinking promoters can be crosslinked by irradiation to satisfactory levels for the production of polypropylene foam. However, the elastic strength and elongation of these materials at temperatures above the melting point have been found to be wholly insufficient to impart the high temperature resistance and controlled recovery characteristics required for the satisfactory production and performance of the heat-shrinkable products described above, and to confer the resistance to deformation and mechanical failure at elevated temperatures of electrical insulation, and similar, products. Hence it is necessary to resort to alternative methods to provide the necessary crosslinking of polypropylenes.

US-A-6212433 discloses compositions for stretched and shrinked films comprising a blend of polypropylene and ethylene copolymers which can be crosslinked

WO-A-00/69930 discloses in one example a composition of polypropylene and EPDM, which can be radiation crosslinked and used for shrink films.

### SUMMARY OF THE INVENTION

The present invention overcomes the above discussed problems of the prior art by providing a means whereby a predominantly polypropylene-based composition can be crosslinked by irradiation to the required level For the production oFheai-shrinkable articles and functional high temperature insulation products by blending the polypropylene with a polymer that is highly sensitive to crosslinking by irradiation.

Hence, on crosslinking such a polymer blend, the radiation-sensitive component will preferably crosslink before the polypropylene can depolymerise to any great extent, and thereby form what may be termed as an interpenetrating crosslinked network with the predominantly uncrosslinked component. The crosslinking also acts to stabilise the blend through compatibilisation of the two relatively immiscible components by inducing a chemical interaction at the interface of the two components. As a result, the blend exhibits the properties of a crosslinked system whilst retaining the high temperature performance, stability and toughness of a predominantly polypropylene-based, semi-crystalline material. The crosslinked network allows the material to be heated close to or above the softening point without melting, such that it may be stretched a predetermined amount without rupture, and then frozen in the stretched state. Subsequent heating of the crosslinked, stretched material near or above the softening point will cause it to recover to approximately its original, unstretched dimensions.

In this invention, an ethylene-propylene elastomer, namely an ethylene-propylene copolymer or rubber (EPM or EPR) or, more preferably, an ethylene-propylene-diene terpolymer (EPDM), and, most preferably, an ethylene-propylene-diene terpolymer polymerised using metallocene catalysts (herein designated mEPDM), for example, the Nordel IP EPDM materials, including the highly crystalline versions, developed by DuPont Dow Elastomers L.L.C. using their INSITE^{R} constrained-geometry catalyst technology, or a blend thereof, provides the necessary crosslinking sensitivity for blends with polypropylene.

The preferred mEPDM terpolymers, are prepared by copolymerising propylene with additional comonomers, specifically ethylene and a diene monomer usually chosen from 5-ethylidene-2- norbornene, dicyclopentadiene, or 1 ,4-hexadiene, using a highly stereospecific, single-site, constrained geometry, or so-called metallocene, catalyst. They differ substantially from existing CPDM materials produced using standard Ziegler Natta coordination catalysts in that it is possible to more accurately control the quantity and position of the comonomers within the polymer structure to provide a more precise molecular weight distribution and a more regular molecular architecture, resulting in higher crystallinity, for example, and superior material properties. More importantly with respect to the current invention, it is possible to adjust the comonomer levels for optimum sensitivity of the mEPDM to crosslinking by electron beam irradiation.

Suitable polypropylenes in this invention would include those materials commonly known in industry as polypropylene homopolymers, or polypropylene copolymers, the latter typically being copolymers of propylene and ethylene. Additionally, said polypropylenes include polypropylenes modified with reactive functional groups, such as acrylic acids, methacrylic acids, acrylates, methacrylates and anhydrides.

Alternatively, one or more additional materials may be incorporated to act as compatibilising or modifying agents for the ethylene-propylene elastomer and the polypropylene. Such materials would include polyolefins such as polyethylenes and copolymers of polyethylene, including those known in the industry as low density polyethylene, high density polyethylene, linear low density polyethylene, and those based on ethytene-butene, ethylene-hexene, ethylene-octene, ethylene-vinyl-acetate, ethylene-methyl-acrylate, ethylene-ethyl-acrylate, ethylene-butyl-acrylate, polybutene-1, 1,2- and 1 ,4-polybutadienes, polyoctanamers, ionomers and similar materials, and particularly those prepared using metallocene catalysts; polyolefins modified with reactive functional groups, such as acrylic acids, methacrylic acids, acrylales, methacrylates and anhydrides; and block copolymers, such as styrene-butadiene, styrene-butadiene-styrene, styrene-ethylene/propylene and styrene-ethylene/butylene-siyrel7e. including functionalised versions thereof.

Blending of the polymeric, and any additional, constituents may be accomplished either *in-situ* with forming of the material during melt processing, or *prior* to forming, by melt mixing using a machine designed for that purpose, such as a continuous single or twin-screw compounder, kneader, or internal batch mixer.

The blended composition is formed into the desired article by melt processing techniques such as extrusion and moulding, including multi-layer processing, for example co-extrusion of the blend with another material to form discrete but intimately bonded layers. The article thus formed is then crosslinked by irradiation, for example with electron beam, gamma or ultra-violet radiation. The crosslinked article may be subsequently stretched at an elevated temperature and then frozen in the stretched state to create an article which can be recovered to its original unstretched dimensions on the application of sufficient heat. Examples of the aforementioned articles would include extruded tubing, sheet, and electrical insulation, and injection, compression or blow moulded insulating shapes, such as end caps and break-out boots, including heat-shrinkable versions of said examples.

Accordingly, in one aspect of the invention, the present invention provides a heat-shrinkable article comprising a crosslinked composition, the crosslinked composition comprising a polypropylene homopolymer or copolymer and an ethylene-propylene elastomer comprising from 85 to 95 percent by weight ethylene; the article being formed by a process comprising:
i) creating a blend of the polypropylene homopolymer or copolymer and the ethylene-propylene elastomer by melt mixing, characterized in that the polypropylene homopolymer or copolymer comprises from 10 to 60 percent by weight of the blend and in that the ethylene-propylene elastomer comprises from 40 to 90 percent by weight of the blend;
ii) melt processing the blend produced in i) to produce a melt processed material;
iii) crosslinking the melt processed material produced in ii) by exposing it to radiation to produce a crosslinked material; and
iv) stretching the crosslinked material at a first temperature close to or above its softening or melting point and subsequently cooling it to a second temperature below its softening or melting point, to thereby freeze the crosslinked material in its stretched form.

In another aspect, the present invention provides a heat-shrinkable article comprising a crosslinked composition, the crosslinked composition comprising a polypropylene homopolymer or copolymer and an ethylene-propylene elastomer comprising from 85 to 95 percent by weight ethylene; the article being formed by a process comprising:
i) creating a blend of the polypropylene homopolymer or copolymer and the ethylene-propylene elastomer by melt mixing, characterized in that the polypropylene homopolymer or copolymer comprises from 80 to 90 percent by weight of the blend;
ii) melt processing the blend produced in i) to produce a melt processed material;
iii) crosslinking the melt processed material produced in ii) by exposing it to radiation to produce a crosslinked material; and
iv) stretching the crosslinked material at a first temperature close to or above its softening or melting point and subsequently cooling it to a second temperature below its softening or melting point, to thereby freeze the crosslinked material in its stretched form.

### DETAILED DESCRIPTION OF PREFERRED EMBODIMENTS

The crosslinking of polyolefins, in particular polyethylene and copolymers of polyethylene, by means of radiation, and in particular by electron beam and gamma radiation, is a well-known and established process for confering high temperature resistance and for the production of heat-shrinkable articles. However, the use of this technology to the crosslinking of polypropylene is stymied by the preference of the polypropylene to depolymerise or degrade through the process of molecular chain scission when subjected to the levels of radiation required to confer the aforementioned properties for practical applications other than minor chain extensions required for the stabilisation of foamed products. This problem has been overcome in the present invention by blending the predominantly radiation-uncrosslinkable polypropylene with a predominantly radiation-crosslinlcable ethylene-propylene elastomer, preferably an ethylene-propylene diene terpolymer.

The polypropylene used in the present invention may be selected from any of the classes known as polypropylene homopolymers or copolymers, being preferentially isotactic in nature, with a melt viscosity preferably similar to the ethylene-propylene elastomer with which it is melt blended.

The polypropylene is added to the blend in the amount from 10 to 60 percent, or in an amount of from to 80 to 90 percent by weight of the blend.

The ethylene-propylene elastomer used in the present invention may be chosen from the class of materials known as ethylene propylene copolymers, rubbers or elastomers (EPM or EPR), more preferably from those known as ethylene-propylene diene terpolymers or elastomers (EPDM), and most preferably from those ethylene-propylene diene terpolymers or elastomers polymerised using single-site or metallocene catalysts (mEPDM), or blends thereof. The ethylene-propylene elastomer is preferably selected to have a similar melt viscosity as the polypropylene at the same temperature and under the same shear conditions required for processing the blend.

The ethylene propylene elastomers comprise 85 to 95% ethylene. Preferably the ethylene-propylene-diene terpolymers additionally comprise 0.5 to 10% diene monomer usually chosen from 5-ethylidene-2- norbornene, dicyclopentadiene, or 1,4-hexadiene, and preferably 5-ethylidene-2-norbornene.

In one embodiment, the ethylene propylene elastomer is added to the blend in the amount from 40 to 90 percent by weight of the blend.

The polypropylene is melt blended with the ethylene-propylene elastomer, and, optionally, with one or more of a number of ingredients such as radiation sensitizers or crosslinking promoters, compatibilisers, pigmenting agents, antioxidants, heat stabilisers, uv stabilisers, mineral fillers, process aids and the like, to form a composition according to the invention.

The compatibiliser may be selected from one or more of the polypropylenes. EPM. EPR. EPDM and mEPDM materials described above; other ethylene-propylene elastomers; polyolefins such as polyethylenes and copolymers of polyethylene, including those known in the industry as low density polyethylene, high density polyethylene, linear low density polyethylene, and those based on ethylene-butene, ethylene-hexene, ethylene-octene, ethylene-vinyl-acetate, ethylene-methyl-acrylate, ethylene-elhyl-acrylate, ethylene-butyl-acrylate, polybutene-1, 1.2- and 1,4-polybutadienes, polyoctanamers, ionomers, and similar materials, and particularly those prepared using metallocene catalysts, polyolefins modified with reactive functional groups, such as acrylic acids, methacrylic acids, acrylates, methacrylates and anhydrides; and block copolymers, such as styrene-butadiene, styrene-butadiene-styrene, styrene-ethylene/propylene and styrene-ethylene/butylene-styrene including functionalised versions thereof.

The function of the compatibiliser is to promote the miscibility of the polypropylene and ethylene-propylene elastomer when they are blended together. The compatibiliser is preferably added in the amount from about 1 to 50% and most preferably from about 5 to 10% by weight of the blend. Addition of a compatibiliser will not be necessary where the polypropylene and ethylene-propylene elastomer exhibit satisfactory natural miscibility.

The radiation sensitizer or crosslinking promoter, if required, may be preferably selected from the family of multifunctional acrylate or methacrylate monomers typically used as crosslink promoters for polyolefin-based polymers. Preferred monomers would include trimethylol propane triacrylate, trimethylol propane trimethacrylate and tetramethylol tetraacrylate. The radiation sensitizer would be added in the amount from about 0.25 to 2.5%, and preferably 0.5 to 1.5% by weight of the blend. The function of the radiation sensitizer is to render the polymer composition more susceptible to crosslinking by electron beam (beta), or gamma radiation, hence allowing a given level of crosslinking to be achieved with less radiation dosage and energy than if a sensitizer were not used. Addition of the crosslinking promoter will not be necessary if the polymer blend by itself is sufficiently sensitive to irradiation to achieve the required degree of crosslinking.

The antioxidant stabiliser may be chosen from any suitable antioxidant or blend of antioxidants designed to prevent degradation of the polypropylene-based blend during melt processing and subsequent heat aging of the final product. Examples of suitable antioxidant and process stabilisers would include those classes of chemicals known as hindered phenol antioxidants and phosphite stabilisers. These would typically be added in an amount from about 0.1 to 5% by weight of the blend depending upon the aging properties required and the type and quantity of additional destabilising ingredients in the composition, for example halogenated flame retardants or mineral fillers. It should also be noted that these antioxidants, if added in sufficient amounts, will act as "radiation scavengers," reducing the effectiveness of the radiation to induce the desired crosslinking reaction and tending to reduce degree of crosslinking obtainable for a given radiation dosage.

The above constituents of the blend may be melt blended either *in-silu* with forming of the final product during melt processing, or prior to Forming by melt mixing using a machine designed specifically for that purpose, such as a continuous twin-screw compounded kneader, or internal batch mixer.

A process for preparing a radiation-crosslinkable polypropylene based article is described below:

A polypropylene copolymer and a mEPDM elastomer along with a radiation sensitizer, antioxidant stabiliser and pigmenting agent, are melt blended in a Buss reciprocating-screw kneader, continuous compounder, at a temperature above the melting point of the composition, to form a fully dispersed compound which is then pelletized and stored for subsequent processing.

The pelletized compound is then melt processed, For example extruded, coextruded, or moulded, to the desired article, The article so produced is then crosslinked by subjecting it to electron beam radiation of approximate dosage between 1 and 1 j megarads in an electron beam accelerator, for example a "Dynamitron" manufactured by Radiation Dynamics Inc. The dosage used is dependent upon the Final properties of the article required. Too low a dosage will result in the article having a tow degree of crosslinking, poor mechanical toughness and a tendency to prematurely soften or melt at elevated temperatures. Too high a dosage may result in degradation of the polypropylene component with a resultant unacceptable deterioration in mechanical properties. A preferred dosage has been Found to be around 5 megarads for the manufacture of heat-shrinkable articles.

The article thus produced exhibits the property of softening but not melting when re-heated above its softening point or crystalline melting point. This is desirable for the manufacture of heat-shrinkable articles, since the polymer may be stretched beyond the original extruded or moulded dimensions without rupture using relatively low forces, and can then be frozen in the stretched state by cooling it rapidly to below the softening or melting point. Stretching can be accomplished by mechanical, pneumatic or hydraulic means. At this point the stretched crosslinks are held in a stable state by the re-formed, solid crystalline regions of the polymeric components. Subsequent re-heating of the stretched article above the melting point will cause the crystalline regions to re-melt and the structure to revert to its original extruded or moulded dimensions. The crosslinking also prevents the article from becoming liquid during this shrinking process.

The invention is further illustrated by the following examples:

### EXAMPLE 1

A polypropylene copolymer of density 0.90 g/cm³ and melt flow index 0.45 dg/min. (Profax 7823 from Montell Polyolefins), and a mEPDM terpolymer of density 0.921. Mooney Viscosity 10 (at 125°C), ethylene content 90% and ethylidene norbornene content 4.9% (Nordel IP 4920 from DuPont Dow Elastomers), are melt blended with a trimelthylol propane triacrylate crosslinking promoter. (SR-351 from Sartomer Co.), and a blend of hindered phenol and phosphite stabilisers, (Irganox B225 from Ciba Speciality Chemicals) in the amounts shown in Table 1 using a Buss Kneader, reciprocating screw, continuous compounder at a temperature of around 180°C, the dispersed blend then being fed through a hot die-face pelletizer and dryer attachment.

**TABLE I**

| Radiation Crosslinkable Polypropylene Material | |
|---|---|
| **Ingredient** | **Weight** |
| Polypropylene | 60 |
| mEPDM | 40 |
| Crosslinlcing Promoter* | 4 |
| Antioxidant** | 3.3 |

| | |
|---|---|
| *Added as a 50% masterbatch in polyethylene **Added as a 15% masterbatch in polyethylene | |

### EXAMPLE 2

In an additional example, the composition is prepared as in Example 1 except that the crosslinking promoter is not included in the formulation.

### EXAMPLE 3

In a further example, the composition is prepared as in Example I except that the mEPDM terpolymer was replaced by a standard EPDM terpolymer of density 0.87g/cm³. Mooney Viscosity 50 (at 125°C), ethylene content 75% and ethylidene norbornene content 4.5% (Royalene IM7200 from Uniroyal Chemical Co.).

### EXAMPLE 4

This example describes the production of a crosslinked, extruded, heat-shrinkable sheet according to the present invention.

The compounded pellets produced according to Example 1, 2 or 3 were fed through a 24:1 L/D single-screw extruder equipped with a single layer sheet die at a melt temperature of approximately 200°C. The sheet was Fixed to the required dimensions of width, thickness and orientation by passing it through a cooled. 3-roll calendering stack, and then wound onto reels. Additionally, the sheet may be coextruded with a second material of similar or dissimilar composition such to create a laminate structure with each layer having different functional properties, for example an adhesive-coated, polypropylene sheet.

The sheet was then crosslinked at a dosage of approximately 5 megarads using a Radiation Dynamics "Dynamitron" electron beam accelerator, and was then tested to determine the degree of crosslinking achieved and for the mechanical properties indicated in Table 2. For the composition described in Example 1, the results in Table 2 also illustrate the effect of different radiation dosages on the properties of the sheet.

The crosslinked sheet was then re-heated to a temperature close to or above the softening point or melting point of the composition, and then stretched using either a machine-direction or a transverse-direction mechanical stretcher. Whilst in the stretched state, the sheet was rapidly cooled using air, water or another suitable medium to below the softening or crystalline melting point of the composition to fix the sheet at the stretched dimensions. The sheet, either prior to or after stretching, may be extrusion laminated or coated with an additional layer of material having different functional properties, such as a heat-activated adhesive.

**TABLE 2**

| Test results For Crosslinked Sheet | | | | | |
|---|---|---|---|---|---|
| **Property** | **Property Value at Specific Radiation Dosage** | | | | |
| | **Example 1** | | | | **Example 2** |
| **Dosage (Mrad)** | **0** | **5.3** | **9.5** | **13.3** | **5.3** |
| Gel Fraction (% degree of crosslinking) | 0 | 67 | 63 | 62 | 50 |
| Hot Tensile Strength @200°C and 100% Elongation (psi) | 0.5 | 50 | 68 | 70 | 41 |
| Ultimate Hot Elongation @ 200°C (%) | 170 | 230 | 150 | 150 | 360 |
| Ultimate Tensile Strength @ 23°C (psi) | 5400 | 4700 | 5000 | 4400 | 5500 |
| Ultimate Elongation @ 23°C (%) | 700 | 490 | 480 | 440 | 560 |
| Flexural Modulus (psi) | 30000 | 42000 | 62000 | 50000 | 40000 |

### EXAMPLE 5

A heat-shrinkable tubing product was made by extruding the composition in Example 1, 2 or 3 into a tubular cross-section, irradiating the extruded tube with an electron beam to a dosage of approximately 5 megarad, heating the thus crosslinked tube to a temperature close to or above the softening point or melting point of the composition, stretching the heated tube by mechanical or pneumatic means whilst at this temperature, and then finally rapidly cooling the tube with air or water to below the softening point or crystalline melting point whilst maintaining the tubing in the stretched state.

Although the invention has been described in relation to certain preferred embodiments, it will be appreciated that it is not intended to be limited thereto. Rather, the invention is intended to encompass all embodiments which fall within the scope of the following claims.

## Claims

1. A heat-shrinkable article comprising a crosslinked composition, the crosslinked composition comprising a polypropylene homopolymer or copolymer and an ethylene-propylene elastomer comprising from 85 to 95 percent by weight ethylene; the article being formed by a process comprising:
i) creating a blend of the polypropylene homopolymer or copolymer and the ethylene-propylene elastomer by melt mixing, **characterized in that** the polypropylene homopolymer or copolymer comprises from 10 to 60 percent by weight of the blend and **in that** the ethylene-propylene elastomer comprises from 40 to 90 percent by weight of the blend;
ii) melt processing the blend produced in i) to produce a melt processed material;
iii) crosslinking the melt processed material produced in ii) by exposing it to radiation to produce a crosslinked material; and
iv) stretching the crosslinked material at a first temperature close to or above its softening or melting point and subsequently cooling it to a second temperature below its softening or melting point, to thereby freeze the crosslinked material in its stretched form.

2. A heat-shrinkable article comprising a crosslinked composition, the crosslinked composition comprising a polypropylene homopolymer or copolymer and an ethylene-propylene elastomer comprising from 85 to 95 percent by weight ethylene; the article being formed by a process comprising:
i) creating a blend of the polypropylene homopolymer or copolymer and the ethylene-propylene elastomer by melt mixing, **characterized in that** the polypropylene homopolymer or copolymer comprises from 80 to 90 percent by weight of the blend;
ii) melt processing the blend produced in i) to produce a melt processed material;
iii) crosslinking the melt processed material produced in ii) by exposing it to radiation to produce a crosslinked material; and
iv) stretching the crosslinked material at a first temperature close to or above its softening or melting point and subsequently cooling it to a second temperature below its softening or melting point, to thereby freeze the crosslinked material in its stretched form.

3. The heat-shrinkable article according to claim 1,
**characterized in that** the polypropylene homopolymer or copolymer comprises from 40 to 60 percent by weight of the blend.

4. The heat-shrinkable article according to claim 1 or 2,
**characterized in that** the polypropylene copolymer comprises a copolymer of propylene and ethylene.

5. The heat-shrinkable article according to claim 1 or 2,
**characterized in that** the polypropylene homopolymer is functionalized with one or more reactive functional groups selected from the group comprising acrylic acids, methacrylic acids, acrylates, methacrylates and anhydrides.

6. The heat-shrinkable article according to claim 1 or 2,
**characterized in that** the ethylene-propylene elastomer is selected from one or more members of the group comprising ethylene-propylene copolymers and ethylene-propylene-diene terpolymers, and is preferably an ethylene-propylene-diene terpolymer polymerized using a metallocene catalyst, preferably a highly stereospecific, single-site, constrained geometry metallocene catalyst.

7. The heat-shrinkable article according to claim 6,
**characterized in that** the ethylene-propylene-diene terpolymer is prepared by copolymerizing propylene with ethylene and a diene monomer selected from the group comprising ethylidene-2-norbornene, dicyclopentadiene and 1,4-hexadiene.

8. The heat-shrinkable article according to claim 6,
**characterized in that** the ethylene-propylene-diene terpolymer comprises 0.5 to 10 percent by weight diene monomer.

9. The heat-shrinkable article according to claim 1 or 2,
further comprising one or more additional ingredients selected from the group comprising radiation sensitizers, crosslinking promoters, pigmenting agents, antioxidants, heat stabilizers, UV stabilizers, mineral fillers and process aids.

10. The heat shrinkable article according to claim 1 or 2,
**characterized in that** the blend includes up to 10% by weight of a compatibiliser selected from the group comprising; polyethylenes selected from the group comprising low density polyethylene, high density polyethylene and linear low density polyethylene; copolymers of polyethylene based on ethylene-butene, ethylene-hexene, ethylene-octene, ethylene-vinyl-acetate, ethylene-methyl-acrylate, ethylene-ethyl-acrylate, ethylene-butyl-acrylate, prepared using metallocene catalysts; polyolefins, including polypropylene, modified with reactive functional groups, selected from the group comprising acrylic acids, methacrylic acids, acrylates, methacrylates and anhydrides; block copolymers selected from the group comprising styrerie-butadiene, styrene-butadiene-styrene, styrene-ethylene/propylene and styrene-ethylene/butylene-styrene, and functionalized versions thereof; and other polymers selected from the group comprising polybutene-1,1,2-polybutadienes, 1,4-polybutadienes, polyoctanamers and ionomers.

11. The heat-shrinkable article according to claim 10,
**characterized in that** the compatibilizer comprises from 5 to 10 percent of the blend.

12. The heat-shrinkable article according to claim 1 or 2,
**characterized in that** the steps i) and ii) are performed simultaneously, or
**characterized in that** said step i) is performed prior to step ii) using a machine selected from the group comprising a continuous twin-screw compounder, a kneader and an internal batcher.

13. The heat-shrinkable article according to claim 1 or 2,
**characterized in that** the melt processed material is crosslinked by electron beam radiation in an electron beam accelerator, the electron beam radiation having an approximate dosage of from 1 to 15 megarads, preferably about 5 megarads, the dosage being selected such that the article exhibits softening but not melting when the article is heated above its softening point or crystalline melting point.

## Patentansprüche

1. Wärmeschrumpfbarer Gegenstand, der eine vernetzte Zusammensetzung aufweist, wobei die vernetzte Zusammensetzung ein Polypropylen-Homopolymer oder -Copolymer und ein Ethylen-Propylen-Elastomer aufweist, das 85 bis 95 Gew.-% Ethylen enthält;
wobei der Gegenstand mit einem Verfahren hergestellt ist, das folgendes aufweist:
i) Erzeugen eines Gemischs aus dem Polypropylen-Homopolymer oder -Copolymer und dem Ethylen-Propylen-Elastomer durch Mischen in der Schmelze, **dadurch gekennzeichnet, daß** das Polypropylen-Homopolymer oder -Copolymer 10 bis 60 Gew.-% des Gemischs ausmacht und daß das Ethylen-Propylen-Elastomer 40 bis 90 Gew.-% des Gemischs ausmacht;
ii) Verarbeiten des im Schritt i) erzeugten Gemischs in der Schmelze, so daß ein in der Schmelze verarbeitetes Material erzeugt wird;
iii) Vernetzen des im Schritt ii) erzeugten, in der Schmelze verarbeiteten Materials, indem es einer Strahlung ausgesetzt wird, so daß ein vernetztes Material erzeugt wird; und
iv) Recken des vernetzten Materials bei einer ersten Temperatur nahe bei oder oberhalb seines Erweichungs- oder Schmelzpunktes und anschließendes Abkühlen auf eine zweite Temperatur unterhalb seines Erweichungs- oder Schmelzpunktes, so daß das vernetzte Material in seiner gereckten Form fest wird.

2. Wärmeschrumpfbarer Gegenstand, der eine vernetzte Zusammensetzung aufweist, wobei die vernetzte Zusammensetzung ein Polypropylen-Homopolymer oder -Copolymer und ein Ethylen-Propylen-Elastomer aufweist, das 85 bis 95 Gew.-% Ethylen enthält;
wobei der Gegenstand mit einem Verfahren hergestellt ist, das folgendes aufweist:
i) Erzeugen eines Gemischs aus dem Polypropylen-Homopolymer oder -Copolymer und dem Ethylen-Propylen-Elastomer durch Mischen in der Schmelze, **dadurch gekennzeichnet, daß** das Polypropylen-Homopolymer oder -Copolymer 80 bis 90 Gew.-% des Gemischs ausmacht;
ii) Verarbeiten des im Schritt i) erzeugten Gemischs in der Schmelze, so daß ein in der Schmelze verarbeitetes Material erzeugt wird;
iii) Vernetzen des im Schritt ii) erzeugten, in der Schmelze verarbeiteten Materials, indem es einer Strahlung ausgesetzt wird, so daß ein vernetztes Material erzeug wird; und
iv) Recken des vernetzten Materials bei einer ersten Temperatur nahe bei oder oberhalb seines Erweichungs- oder Schmelzpunktes und anschließendes Abkühlen auf eine zweite Temperatur unterhalb seines Erweichungs- oder Schmelzpunktes, so daß das vernetzte Material in seiner gereckten Form fest wird.

3. Wärmeschrumpfbarer Gegenstand nach Anspruch 1,
**dadurch gekennzeichnet,**
**daß** das Polypropylen-Homopolymer oder -Copolymer 40 bis 60 Gew.-% des Gemischs ausmacht.

4. Wärmeschrumpfbarer Gegenstand nach Anspruch 1 oder 2,
**dadurch gekennzeichnet,**
**daß** das Polypropylen-Copolymer ein Copolymer von Propylen und Ethylen aufweist.

5. Wärmeschrumpfbarer Gegenstand nach Anspruch 1 oder 2,
**dadurch gekennzeichnet,**
**daß** das Polypropylen-Homopolymer mit einer oder mehreren reaktiven funktionellen Gruppen funktionalisiert ist, die aus der Gruppe ausgewählt sind, die Acrylsäuren, Methacrylsäuren, Acrylate, Methacrylate und Anhydride aufweist.

6. Wärmeschrumpfbarer Gegenstand nach Anspruch 1 oder 2,
**dadurch gekennzeichnet,**
**daß** das Ethylen-Propylen-Elastomer aus einer oder mehreren Verbindungen aus der Gruppe von Ethylen-Propylen-Copolymeren und Ethylen-Propylen-Dien-Terpolymeren ausgewählt ist und vorzugsweise ein Ethylen-Propylen-Dien-Terpolymer ist, das unter Verwendung eines Metallocenkatalysators, vorzugsweise eines stark stereospezifischen Metallocenkatalysators mit einheitlichen aktiven Zentren und eingeschränkter Geometrie, polymerisiert ist.

7. Wärmeschrumpfbarer Gegenstand nach Anspruch 6,
**dadurch gekennzeichnet,**
**daß** das Ethylen-Propylen-Dien-Terpolymer durch Copolymerisieren von Propylen mit Ethylen und einem Dienmonomer aus der Gruppe von Ethyliden-2-norbornen, Dicyclopentadien und 1,4-Hexadien hergestellt ist.

8. Wärmeschrumpfbarer Gegenstand nach Anspruch 6,
**dadurch gekennzeichnet,**
**daß** das Ethylen-Propylen-Dien-Terpolymer 0,5 bis 10 Gew.-% Dienmonomer aufweist.

9. Wärmeschrumpfbarer Gegenstand nach Anspruch 1 oder 2,
der ferner einen oder mehrere weitere Bestandteile aufweist, die aus der Gruppe ausgewählt sind, die Strahlungssensibilisatoren, Vernetzungspromotoren, pigmentierende Mittel, Antioxidantien, Wärmestabilisatoren, UV-Stabilisatoren, mineralische Füllstoffe und Verarbeitungshilfsmittel aufweist.

10. Wärmeschrumpfbarer Gegenstand nach Anspruch 1 oder 2,
**dadurch gekennzeichnet,**
**daß** das Gemisch bis zu 10 Gew.-% eines kompatibel machenden Mittels aufweist, das aus der folgenden Gruppe ausgewählt ist, die folgendes aufweist: Polyethylene, die aus der Gruppe von Polyethylen niedriger Dichte, Polyethylen hoher Dichte und linearem Polyethylen niedriger Dichte ausgewählt sind; Copolymere von Polyethylen, die auf Ethylen-Buten, Ethylen-Hexen, Ethylen-Octen, Ethylen-Vinylacetat, Ethylen-Methylacrylat, Ethylen-Ethylacrylat, Ethylen-Butylacrylat basieren und unter Verwendung von Metallocenkatalysatoren hergestellt sind;
Polyolefine, einschließlich Polypropylen, das mit reaktiven funktionellen Gruppen modifiziert ist, die aus der Gruppe ausgewählt sind, die Acrylsäuren, Methacrylsäuren, Acrylate, Methacrylate und Anhydride aufweist; Blockcopolymere, die aus der Gruppe ausgewählt sind, die Styrol-Butadien, Styrol-Butadien-Styrol, Stryol-Ethylen/Propylen und Styrol-Ethylen/Butylen-Styrol und funktionalisierten Formen davon aufweist; und
andere Polymere, die aus der Gruppe ausgewählt sind, die Polybuten-1, 1,2-Polybutadiene, 1,4-Polybutadiene, Polyoctanamere und Ionomere aufweist.

11. Wärmeschrumpfbarer Gegenstand nach Anspruch 10,
**dadurch gekennzeichnet,**
**daß** das kompatibel machende Mittel 5 bis 10 % des Gemischs ausmacht.

12. Wärmeschrumpfbarer Gegenstand nach Anspruch 1 oder 2,
**dadurch gekennzeichnet,**
**daß** die Schritte i) und ii) gleichzeitig durchgeführt werden
oder **dadurch gekennzeichnet,**
**daß** der Schritt i) vor dem Schritt ii) durchgeführt wird, wobei eine Vorrichtung verwendet wird, die aus der Gruppe ausgewählt ist, die einen kontinuierlichen Doppelschneckenmischer, eine Knetvorrichtung und eine interne Dosiervorrichtung aufweist.

13. Wärmeschrumpfbarer Gegenstand nach Anspruch 1 oder 2,
**dadurch gekennzeichnet,**
**daß** das in der Schmelze verarbeitete Material durch Elektronenstrahl-Bestrahlung in einem Elektronenstrahlenbeschleuniger vernetzt ist, wobei die Elektronenstrahlen eine Dosis von etwa 1 bis 15 Mrad, vorzugsweise etwa 5 Mrad aufweisen, wobei die Dosis so gewählt ist, daß der Gegenstand weich wird, jedoch nicht schmilzt, wenn der Gegenstand über seinen Erweichungspunkt oder Kristallschmelzpunkt erwärmt wird.

## Revendications

1. Article thermo-rétractable comprenant une composition réticulée, la composition réticulée comprenant un homopolymère ou copolymère polypropylène et un élastomère éthylène-propylène comprenant de 85 à 95 pour cent en poids d'éthylène ; l'article étant formé par un procédé consistant à:
i) créer un mélange de l'homopolymère ou copolymère polypropylène et de l'élastomère éthylène-propylène en mélangeant à l'état fondu, **caractérisé en ce que** l'homopolymère ou copolymère polypropylène constitue de 10 à 60 pour cent en poids du mélange et **en ce que** l'élastomère éthylène-propylène constitue de 40 à 90 pour cent en poids du mélange;
ii) traiter à l'état fondu le mélange produit en i) pour produire une matière traitée fondue;
iii) réticuler la matière traitée fondue en ii) en l'exposant à un rayonnement pour produire une matière réticulée; et
iv) étirer la matière réticulée à une première température proche ou au-dessus de son point de ramollissement ou de fusion, puis la refroidir à une deuxième température au-dessous de son point de ramollissement ou de fusion, pour ainsi figer la matière réticulée en sa forme étirée.

2. Article thermo-rétractable comprenant une composition réticulée, la composition réticulée comprenant un homopolymère ou copolymère polypropylène et un élastomère éthylène-propylène comprenant de 85 à 95 pour cent en poids d'éthylène ; l'article étant formé par un procédé consistant à:
i) créer un mélange de l'homopolymère ou copolymère propylène et de l'élastomère éthylène-propylène en mélangeant à l'état fondu, **caractérisé en ce que** l'homopolymère ou copolymère polypropylène constitue de 80 à 90 pour cent en poids du mélange;
ii) traiter à l'état fondu le mélange produit en i) pour produire une matière traitée fondue;
iii) réticuler la matière traitée fondue en ii) en l'exposant à un rayonnement pour produire une matière réticulée; et
iv) étirer la matière réticulée à une première température proche ou au-dessus de son point de ramollissement ou de fusion puis la refroidir à une deuxième température au-dessous de son point de ramollissement ou de fusion, pour ainsi figer la matière réticulée en sa forme étirée.

3. Article thermo-rétractable selon la revendication 1,
**caractérisé en ce que** l'homopolymère ou copolymère polypropylène constitue de 40 à 60 pour cent en poids du mélange.

4. Article thermo-rétractable selon la revendication 1 ou 2,
**caractérisé en ce que** le copolymère polypropylène comprend un copolymère de propylène et d'éthylène.

5. Article thermo-rétractable selon la revendication 1 ou 2,
**caractérisé en ce que** l'homopolymère polypropylène est fonctionnalisé avec un ou plusieurs groupes fonctionnels réactifs choisis dans le groupe comprenant les acides acryliques, les acides méthacryliques, les acrylates, les méthacrylates et les anhydrides.

6. Article thermo-rétractable selon la revendication 1 ou 2,
**caractérisé en ce que** l'élastomère éthylène-propylène est choisi parmi un ou plusieurs membres du groupe comprenant les copolymères éthylène-propylène et les terpolymères éthylène-propylène-diène, et est de préférence un terpolymère éthylène-propylène-diène polymérisé en utilisant un catalyseur métallocène, de préférence un catalyseur métallocène à géométrie contrainte, à site unique et hautement stéréospécifique.

7. Article thermo-rétractable selon la revendication 6,
**caractérisé en ce que** le terpolymère éthylène-propylène-diène est préparé en copolymérisant le propylène avec de l'éthylène et un monomère diène choisi dans le groupe comprenant l'éthylidène-2-norbornène, le dicyclopentadiène et le 1,4-hexadiène.

8. Article thermo-rétractable selon la revendication 6,
**caractérisé en ce que** le terpolymère éthylène-propylène-diène comprend de 0,5 à 10 pour cent en poids de monomère diène.

9. Article thermo-rétractable selon la revendication 1 ou 2,
comprenant en outre un ou plusieurs ingrédients supplémentaires choisis dans le groupe comprenant les sensibilisateurs de rayonnement, les promoteurs de réticulation, les agents de pigmentation, les anti-oxydants, les stabilisants thermiques, les stabilisants contre les UV, les charges minérales et les aides au procédé.

10. Article thermo-rétractable selon la revendication 1 ou 2,
**caractérisé en ce que** le mélange comprend jusqu'à 10 % en poids d'un agent compatibilisant choisi dans le groupe comprenant les polyéthylènes choisis dans le groupe comprenant le polyéthylène basse densité, le polyéthylène haute densité et le polyéthylène basse densité linéaire; les copolymères de polyéthylène basés sur l'éthylène-butène, l'éthylène-hexène, l'éthylène-octène, l'éthylène-acétate de vinyle, l'éthylène-acrylate de méthyle, l'éthylène-acrylate d'éthyle, l'éthylène-acrylate de butyle, préparés en utilisant des catalyseurs métallocènes; les polyoléfines, y compris le polypropylène, modifiées avec des groupes fonctionnels réactifs, choisis dans le groupe comprenant les acides acryliques, les acides méthacryliques, les acrylates, les méthacrylates et les anhydrides; les copolymères séquencés choisis dans le groupe comprenant le styrène-butadiène, le styrène-butadiène-styrène, le styrène-éthylène/propylène et le styrène-éthylène/butylène-styrène, et leurs versions fonctionnalisées; et d'autres polymères choisis dans le groupe comprenant les polybutène-1,1,2-polybutadiènes, les 1,4-polybutadiènes, les polyoctanamères et les ionomères.

11. Article thermo-rétractable selon la revendication 10,
**caractérisé en ce que** l'agent compatibilisant constitue de 5 à 10 pour cent du mélange.

12. Article thermo-rétractable selon la revendication 1 ou 2,
**caractérisé en ce que** les étapes i) et ii) sont réalisées simultanément, ou
**caractérisé en ce que** ladite étape i) est réalisée avant l'étape ii) en utilisant une machine choisie dans le groupe comprenant un mélangeur-masticateur continu à vis jumelées, une pétrisseuse et un mélangeur interne.

13. Article thermo-rétractable selon la revendication 1 ou 2,
**caractérisé en ce que** la matière traitée à l'état fondu est réticulée par un rayonnement de faisceau d'électrons dans un accélérateur de faisceau d'électrons, le rayonnement du faisceau d'électrons ayant une dose d'environ 1 à 15 mégarads, de préférence d'environ 5 mégarads, la dose étant choisie de telle manière que l'article présente un ramollissement mais pas une fusion quand l'article est chauffé au-dessus de son point de ramollissement ou de son point de fusion cristallin.
